# EUROPEAN PATENT SPECIFICATION

(11) **EP 2 231 339 B1**
(45) Date of publication and mention of the grant of the patent: **12.08.2015**
(21) Application number: 08863413.4
(22) Date of filing: 19.12.2008
(51) Int. Cl.: B01J 2/04, B05B 1/26, B05B 7/08, B05B 7/16

(54) **DEVICE AND METHOD FOR PRODUCING PARTICLES**
VORRICHTUNG UND VERFAHREN ZUR HERSTELLUNG von Partikeln
DISPOSITIF ET PROCÉDÉ POUR PRODUIRE DES PARTICULES

(30) Priority: 20.12.2007 FI 20071001
(43) Date of publication of application: 29.09.2010
(73) Proprietor: BENEQ OY, 02200 Espoo (FI)
(72) Inventor: ASIKKALA, Kai, 02200 Espoo (FI)
(74) Representative: Kolster Oy Ab
(86) International application number: PCT/FI2008/050778
(87) International publication number: WO 2009/080896

(56) References cited:
- WO-A1-03/070640
- WO-A1-2004/028222
- WO-A1-2006/008175
- WO-A1-2006/043006
- WO-A1-2006/119653
- FI-B1- 117 971
- US-A- 5 372 754
- US-A1- 2004 050 948
- US-A1- 2004 226 508

## Description

### BACKGROUND OF THE INVENTION

The present invention relates to a device for producing particles, and in particular, to a device in accordance with the preamble of claim 1 for forming particles, the device comprising at least two atomizers that atomize one or more liquids into droplet sprays. The present invention also relates to a method for producing particles, and in particular to a method in accordance with the preamble of claim 10 for forming particles, in which method at least one liquid is atomized into two or more droplet sprays.

A liquid may be atomized into tiny droplets with a variety of techniques, such as a gas-dispersed atomizer, a pressure-dispersed atomizer and an ultrasound atomizer. Various atomization manners have been described comprehensively in the publication by Huimin Liu, "Science and Engineering of Droplets - Fundamentals and Applications, (2000), William Andrew Publishing, LLC, New York, p. 19-120, particularly p. 59-61, describing a so-called "whistle atomization" device, in which colliding liquid jets are atomized by means of ultrasound. By means of the device it is possible to produce from water droplets of less than 10 micrometres at a high production rate.

Patent publication FI98832, dated 16 March 1997 (Liekki Oy), describes a method and a device for spraying material, whereby the substance to be sprayed is led to a flame produced by means of a combustion gas and the particles in the material to be sprayed are sprayed by means of the flame to a desired target. The substance to be sprayed is passed to the flame in liquid form and atomized by means of a gas substantially in the vicinity of the flame. Thus, it is possible to produce extremely tiny particles, in the order of nanometres, rapidly, economically and in a single phase. The device of the publication has a problem that nanoparticles are created in a high-rate flame and in the device the atomization process and the flame formation process are interlinked, and the device does not comprise a degree of freedom for optimizing the atomization and the flame independently of one another. The device does not allow simultaneous production of particles from liquids of different types either. Document FI 117 971 B1 describes one prior art method and device for producing particles by atomizing liquid feedstock to droplets. The droplets are further conveyed into a flame, serving as a thermal reactor, in which nanoparticles having average aerodynamic diameter of 1 to 1000 nm are formed. Document US 2004/050948 A1 describes another method and apparatus which produce aerosol. The aerosol is produced by directing two liquid jets in an angle between 30 to 120 degrees towards each other such that liquid jets collide to each other at a collision point such that an aerosol is produced.

The prior art thus poses a problem that production of mist or aerosol of good quality at a high production rate requires a complicated device. Further, when mist or aerosol is used for producing nanomaterial, a problem with the prior art is to separate different process steps, such as atomization and flame formation, from one another.

### BRIEF DESCRIPTION OF THE INVENTION

The object of the present invention is thus to provide a method and a device implementing the method such that the above problems can be eliminated. This is achieved by a device in accordance with the characterizing part of claim 1, which is characterized in that at least two atomizers that are arranged directed towards one another such that droplet sprays produced thereby collide with one another to form a mist or an aerosol, and that the device also comprises a thermal reactor, where the mist or the aerosol forms particles whose average aerodynamic diameter is less than 1000 nm. The object of the invention is further achieved by a method in accordance with the characterizing part of claim 10, which is characterized by guiding at least two droplet sprays towards one another such that the droplet sprays collide with one another to form a mist or an aerosol and conveying the formed mist or aerosol into the thermal reactor, where the mist or the aerosol forms particles whose average aerodynamic diameter is less than 1000 nm.

Preferred embodiments of the invention are disclosed in the dependent claims.

The device and the method in accordance with the present invention are based on a surprising observation that as two atomized droplet sprays are directed to collide with one another there is produced an aerosol or a mist whose droplets are tiny. An aerosol refers to a mixture in which solid or liquid particles float in a gas. In this context, a mist refers to a mixture which includes solid or liquid particles whose average size is larger than in the aerosol. Advantageously, when droplet sprays are directed substantially straight against one other there is obtained a mist or an aerosol whose mobility is nearly nonexistent, whereby said mist or aerosol may be moved in a desired direction with a separate gas flow directed substantially to the collision point of the droplet sprays. Because the droplet sprays do not coalesce until at the collision point, said device allows production of a mist or aerosol that consists of at least two different liquids, such as droplets atomized from water and methanol, which liquids may be mutually immiscible, such as water and benzine, or mutually reactive in such a manner that they cannot be led together in the same atomizer, for instance, because the liquids would together form a gelling mixture, such as water containing a metallic salt and tetramethylorthosilane (TE-OS). With the device of the invention it is possible to produce mist and aerosol also from mixtures, liquids that contain a solvent and a metallic salt dissolved therein, or liquids that are colloidal solutions. The average droplet size of droplets produced by different atomizers need not necessarily be the same, whereby the average droplet size in droplets sprays colliding with one another differs. From the viewpoint of operational performance of the device it is advantageous if the momentum of the colliding droplet sprays is substantially the same, whereby, on the basis of the law of momentum conservation, the momentum of the produced mist is substantially zero. In other words, the momentums are substantially the same, but of the opposite signs. Hence, the device and the method of the invention permit formation of mists consisting of various materials. From the obtained mist or aerosol the device and the method of the invention further produce nanosize particles of solid material having a diameter of 1 to 1000 nm.

Thus, with the device and the method of the invention it is possible to provide particles, such as metallic or metallic oxide particles, whose average aerodynamic diameter is less than 1000 nm. These particles are advantageously produced such that the mist or aerosol produced with the device of the invention and containing at least one metallic salt is led into a thermal reactor, where the mist droplets or the aerosol droplets and the metal contained therein evaporate, and nanosize metallic or metallic oxide particles are created through nucleation and condensation. Advantageously said thermal reactor is a flame produced by means of gas burning. In that case, it is advantageous to use at least one exothermal liquid in the device of the invention. Further, it is advantageous to use for atomization of the liquids at least one of the gases required for flame formation, such as hydrogen, oxygen or hydrogen/oxygen mixture. Into the device of the invention it is also possible to feed at least one gas that reacts in thermal reactor and forms metallic or metallic oxide particles.

The present invention has an advantage that the device of the invention allows production of mist or aerosol of uniform quality, wherefrom nanoparticles of uniform quality will be further produced for use in coating processes, for instance. Because the device of the invention may have various embodiments, the mist or the aerosol may be shaped into a line-like mist front or aerosol front, whereby the mist or the aerosol may create a line-like nano-particle jet, which may be advantageously used for coating a broad, ribbon-like material, for instance. Examples of these include a paper web on a paper machine, textile sheet on a textile machine or a glass ribbon of a glass-making process, in particular of a float process.

### BRIEF DESCRIPTION OF THE DRAWINGS

In the following the invention will be described in greater detail, in connection with preferred embodiments, with reference to the attached drawings, in which
Figure 1 is a schematic view of the principle of the device in accordance with the invention, in which two gas-dispersed atomizers are directed substantially against one another;
Figure 2 shows an embodiment of the device in accordance with the invention, in which a flame generated by a gas flow serves as a thermal reactor; and
Figure 3 shows another embodiment of the device in accordance with the invention, in which a flame generated by burning an exothermal liquid serves as the thermal reactor.

### DETAILED DESCRIPTION OF THE INVENTION

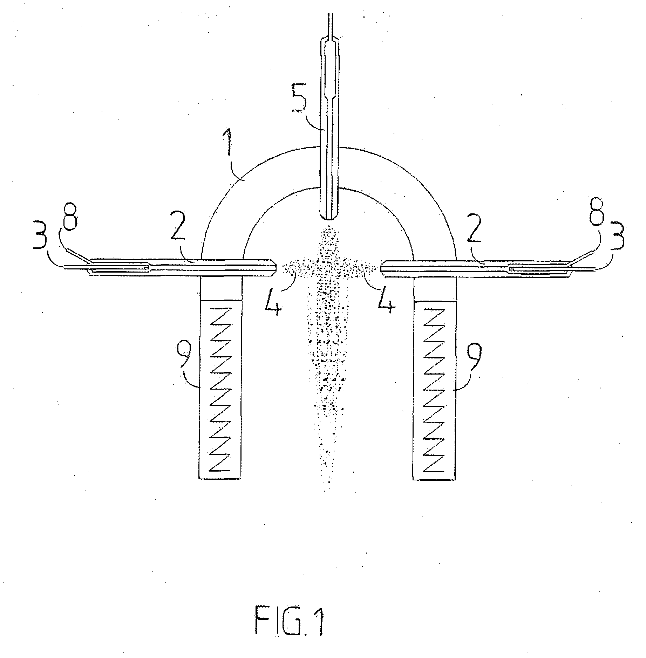

Figure 1 shows a device of the invention for producing particles. In the body 1 of the device there are secured two atomizers 2 directed substantially towards one another. The atomizers 2 are arranged in the device directed straight towards one another in accordance with Figure 1. In other words, advantageously the atomizers 2 are arranged directed substantially coaxially towards one another such that their droplet sprays 4 collide substantially straight against one another. The device may comprise two or more atomizers 2. Advantageously, the atomizers 2 are arranged in pairs so as to form one or more atomizer pairs such that the atomizers 2 of each atomizer pair are directed substantially straight, advantageously coaxially, towards one another, whereby the droplet sprays 4 of each atomizer pair collide straight with one another. In the device the atomizer pairs may further be arranged in succession or side by side vertically or horizontally.

A liquid 3 to be atomized and an atomizing gas 8 are fed into the atomizer 2. The atomizing gas 8 and the liquid 3 are fed into the atomizer 2 advantageously at different rates, whereby the rate difference between the atomizing gas 8 and the liquid 3 at the output of the atomizer 2 provides atomization of the liquid 3 into a droplet spray 4 that consists of tiny droplets. The droplet sprays 4 collide with one another, whereby there is surprisingly produced mist or aerosol consisting of tiny droplets. The droplet spray 4 in itself may constitute the mist or the aerosol. When the droplet sprays that are directed substantially straight towards one another collide straight against one another there will be provided a mist or an aerosol whose mobility is nearly nonexistent, their momentums being substantially the same. Further, the device may be arranged to include means for feeding at least two different liquids 3 to at least two different atomizers. In other words, the device may be provided such that it is possible to feed the same or different liquids 3 to two or more atomizers 2. In other words, if so desired, it is possible to feed the same or different liquids to the atomizers 2 of each atomizer pair. In addition, at least two atomizer pairs may use the same liquid or liquids as the other atomizer pairs. In that case each atomizer pair may produce, if so desired, the mist that is different from or the same as that produced by the adjacent atomizer pair. Further, the atomizers 2 of the device may be arranged to produce droplet sprays 4 whose droplets are substantially different or the same in average droplet size. The droplet size may be affected, for instance, by the geometry of the atomizers 2 or by the atomizing gas rate or the rate difference between them. This enables production of mist or aerosol that is homogeneous or heterogeneous in droplet size.

Advantageously, the device also comprises means for conveying a gas flow of a gas from at least one direction to the collision point of the droplet sprays 4. This is advantageously implemented by providing the device with a gas nozzle 5 for feeding the gas from at least one direction to the collision point of the droplet sprays 4. Thus, it is possible to move or displace the mist or aerosol produced at the collision point of the droplet sprays 4 to a desired direction by means of the gas flow. It is possible to use any gas in the gas nozzle 5. In other words, it may be an inert gas, or alternatively, it may be a combustion gas or gas that reacts with the mist or aerosol. In the embodiment of Figure 1, the gas nozzle 5 is arranged in the device such that the gas flow runs and collides substantially perpendicularly to the droplet sprays 4.

In the embodiment of Figure 1 the device also comprises a thermal reactor that is provided by heaters 9, such as electric resistances. The thermal reactor may also be provided by a flame, microwaves or laser radiation, for instance. The gas flow discharged from the gas nozzle 5 thus guides the generated mist or aerosol into the thermal reactor. In the thermal reactor 9 at least some of material contained in the mist or aerosol evaporates, whereby the droplets in the mist or the aerosol may form nanoparticles whose average aerodynamic diameter is less than 1000 nm. In that case, for instance, in the thermal reactor the solvent present in the mist or aerosol evaporates, as well as the metal contained in the mist or the aerosol. As the metal cools down, it forms either metallic or metallic oxide particles through nucleation and condensation. In accordance with Figure 1, the thermal reactor is provided by one or more heaters 9, which may be electric resistances or the like.

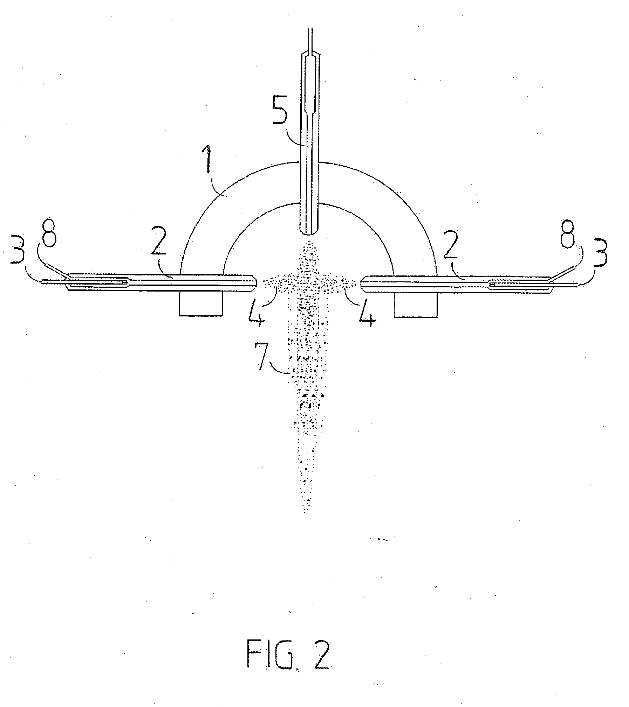

Figure 2 shows another embodiment of the device in accordance with the invention for producing mist or aerosol and further for producing nanoparticles from the mist or the aerosol. In the body 1 of the device there are mounted two atomizers 2 directed substantially towards one another. Into the atomizer 2 there is fed liquid 3 to be atomized and atomizing gas 8. The rate difference between the atomizing gas 8 and the liquid 3 at the output of the atomizer 2 provides atomization of the liquid 3 into droplet sprays comprising tiny droplets 4. The droplet sprays 4 collide with one another, whereby there is surprisingly generated mist or aerosol consisting of extremely tiny droplets. From the gas nozzle 5 secured to the body 1 of the device there is fed gas substantially to the collision point of the droplet sprays 4. The gas flow discharging from the gas nozzle 5 consists of a combustion gas, such as hydrogen, and an oxidizing gas, such as oxygen. The rate of the gas flow at the output end of the gas nozzle is substantially higher than the propagation rate of the flame front in the gas mixture, whereby the flame does not burn inside the gas nozzle 5. The gas mixture discharging from the gas nozzle is ignited, whereby a flame 7 is formed, which serves as the thermal reactor. The gas mixture producing the flame 7 guides the created mist or aerosol into the flame 7. In an embodiment the droplets in the droplet spray 4 produced in at least second atomizer contain a metallic salt dissolved in a solvent. The solvent in the mist or the aerosol evaporates in the flame 7, as well as the metal contained in the mist or the aerosol. When the metal cools down it forms either metallic or metallic oxide particles through nucleation and condensation. In accordance with the above, this embodiment combines the kinetic effect of the gas flow on the mist and aerosol and the flame 7 formation for producing particles from the mist or the aerosol.

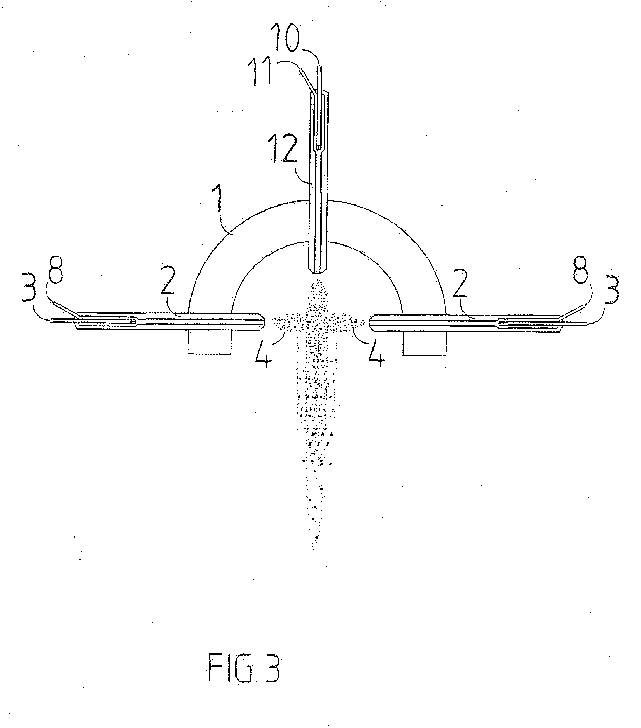

Figure 3 shows another embodiment of the device in accordance with the invention for producing mist or aerosol and further for producing nanoparticles from the mist or the aerosol. In the body 1 of the device there are mounted two atomizers 2 directed substantially towards one another. Into the atomizer 2 there is fed liquid 3 to be atomized and atomizing gas 8. The rate difference between the atomizing gas 8 and the liquid 3 at the output of the atomizer 2 provides atomization of the liquid 3 into droplet sprays comprising tiny droplets 4. The droplet sprays 4 collide with one another, whereby there is surprisingly generated mist or aerosol consisting of extremely tiny droplets. Exothermal liquid droplets 10 and an oxidizing gas 11 (together an aerosol) are fed from the atomizer 12 secured to the body 1 of the device substantially to the collision point of the droplet sprays 4. The aerosol discharging from the atomizer 12 is ignited, whereby a flame 7 is formed, which serves as the thermal reactor. In that case the oxidizing gas 11 serves as an atomizing gas for the exothermal liquid 10. The aerosol producing the flame 7 guides the produced mist or aerosol into the flame 7. In an embodiment the droplets in the droplet spray 4 produced in at least second atomizer 2 contain metallic salt dissolved in a solvent. The solvent in the mist or the aerosol evaporates in the flame 7, as well as the metal contained in the mist or the aerosol. When the metal cools down, it forms either metallic or metallic oxide particles through nucleation and condensation.

The embodiments of previous Figures 1, 2 and 3 may be combined in a desired manner. In addition, the atomizers 2 may be mounted or provided such that the droplet sprays 4 produced thereby collide with one another at a desired angle. In an advantageous case the droplet sprays 4 collide substantially straight with one another, whereby the collision angle between them is about 180 degrees. When the droplet sprays collide substantially straight with one another, the atomizers 2 may be mounted such that they are facing one another substantially coaxially.

In the method of the present invention for producing a mist or an aerosol, one or more liquids are atomized into two or more droplet sprays 4. In accordance with the invention at least two droplet sprays 4 are directed substantially straight towards one another such that the droplet sprays 4 collide straight with one another. Advantageously, two droplet sprays 4 are directed substantially coaxially towards one another such that the droplet sprays 4 collide substantially straight against one another. In this context, coaxiality refers to the droplet sprays moving substantially coaxially towards one another. In the method it is possible to direct two or more droplet sprays 4 in pairs straight towards one another for forming one or more droplet spray pairs such that the droplet sprays 4 directed straight towards one another collide straight with one another. The droplet sprays 4 directed substantially straight against one another are atomized such that the droplets therein are substantially different or the same in average droplet size.

In the method it is possible to provide at least two different droplet sprays 4 using at least two different liquids 3. Thus, the colliding droplet sprays 4 may be produced from the same or different liquids 3. Likewise, different droplet spray pairs may use different liquids 3 or the same liquid(s) 3. The different liquids 3 used may be mutually immiscible or miscible. In an embodiment of the invention there is used at least one liquid 3 that contains a solvent and a metallic salt dissolved therein. The solvent may be an exothermal liquid. In addition, the liquid used in the method may be a mixture, an emulsion or a colloidal solution.

The mist or the aerosol produced in the collision of the droplet sprays 4 is substantially immobile, when the momentums of the droplet sprays 4 are substantially equal. Thus, the produced mist may be moved by conveying at least one gas flow to the collision point of the droplet sprays 4. By means of the gas flow it is possible to move the mist or the aerosol, and moreover, it is possible to control its shape. In an embodiment the gas flow is conveyed to the collision point of the droplet sprays 4 substantially perpendicularly to the droplet sprays 4. Alternatively, it is also possible to convey two or more gas flows to the collision point of the droplet sprays 4.

Advantageously, the obtained mist or aerosol is further guided by means of the above-mentioned gas flow, for instance, to a thermal reactor, where at least some of the material contained in the mist or the aerosol evaporates, whereby the droplets in the mist or the aerosol may form nanoparticles whose average aerodynamic diameter is less than 1000 nm.

The thermal reactor used may be a flame or a space that is heated by an external heat source. Gases required for producing the flame 7 may be fed along with at least one droplet spray 4 coming from an atomizer 2. Alternatively or additionally, gases required for producing the flame 7 are fed along with at least one gas flow from a gas nozzle 12 guiding the droplet sprays 4. Further, gases required for producing the flame 7 may be fed with an atomizer 12, from which there are also fed droplets produced from an exothermal liquid 10. In that case the gas 11 required for producing the flame 7, such as an oxidizing gas, may serve as an atomizing gas that atomizes the exothermal liquid 10 into droplets. When the droplets in the droplet spray 4 produced by at least one of the atomizers 2 contain a metallic salt dissolved in a solvent, the solvent present in the mist or the aerosol vaporizes in the flame 7, and so does the metal contained in the mist. The vaporized metal forms either metallic or metallic oxide particles through nucleation and condensation (gas-to-particle conversion).

It is apparent to a person skilled in the art that as technology advances, the inventive whole may be implemented in a variety of ways. The invention and the embodiments thereof are not restricted to the above examples, but they may vary within the scope of the claims.

## Claims

1. A device for producing particles, the device comprising at least two atomizers (2) that atomize a liquid (3) conveyed therein into droplet sprays (4) and a thermal reactor where particles having an average aerodynamic diameter of less than 1000 nm are formed, **characterized in that** the at least two atomizers (2) are directed towards one another such that the droplet sprays (4) produced thereby collide with one another so as to form a mist or an aerosol, from which mist or aerosol the particles having the average aerodynamic diameter of less than 1000 nm are formed in the thermal reactor.

2. The device of claim 1, **characterized in that** at least two atomizers (2) are arranged directed towards one another substantially coaxially such that the droplet sprays (4) thereof collide substantially straight against one another.

3. The device of claim 1 or 2, **characterized in that** the atomizers (2) are arranged in pairs to form one or more atomizer pairs such that the atomizers (2) of each atomizer pair are directed substantially straight towards one another.

4. The device of any one of the preceding claims 1 to 3, **characterized by** comprising means (5) for conveying a gas flow from at least one direction to the collision point of the droplet sprays (4).

5. The device of claim 4, **characterized by** comprising at least one gas nozzle (5) for feeding gas from at least one direction to the collision point of the droplet sprays.

6. The device of claim 5, **characterized in that** the gas nozzle (5) is arranged in the device such that the gas flow runs substantially perpendicularly to the droplet sprays (4).

7. The device of any one of the preceding claims 1 to 6, **characterized in that** the device includes means for feeding at least two different liquids (3) to at least two different atomizers (2).

8. The device of any one of the preceding claims 1 to 7, **characterized in that** at least two atomizers (2) are arranged to produce droplet sprays (4) whose droplets are substantially different in average droplet size.

9. The device of any one of the preceding claims 1 to 8, **characterized in that** the thermal reactor is a flame or a space that is heated with separate heaters (9).

10. A method for producing particles, in which method at least one liquid (3) is atomized into two or more droplet sprays (4) and forming particles having an average aerodynamic diameter of less than 1000 nm in a thermal reactor, **characterized by** directing at least two droplet sprays (4) towards one another such that the droplet sprays (4) collide with one another so as to form a mist or an aerosol, and conveying the formed mist or aerosol into the thermal reactor, where particles having the average aerodynamic diameter of less than 1000 nm are formed from the mist or the aerosol.

11. The method of claim 10, **characterized by** directing two droplet sprays (4) substantially straight towards one another such that the droplet sprays (4) collide substantially straight against one another.

12. The method of claim 10 or 11, **characterized by** directing the droplet sprays (4) in pairs towards one another for forming one or more droplet spray pairs such that the droplet sprays (4) directed towards one another collide straight with one another.

13. The method of any one the preceding claims 10 to 12, **characterized by** conveying a gas flow from at least one direction to the collision point of the droplet sprays (4).

14. The method of claim 13, **characterized in that** the gas flow is conveyed to the collision point of the droplet sprays (4) substantially perpendicularly to the droplet sprays (4).

15. The method of any one of the preceding claims 10 to 14, **characterized in that** at least one gas flow contains at least one gas that reacts in the thermal reactor.

16. The method of any one of the preceding claims 10 to 15, **characterized by** using a flame as the thermal reactor or forming the thermal reactor of a space that is heated with separate heaters (9).

17. The method of any one of the preceding claims 10 to 16, **characterized by** providing at least two different droplet sprays (4) using at least two different liquids (3).

18. The method of any one of the preceding claims 10 to 17, **characterized by** atomizing the droplet sprays (4) directed substantially against one another such that their droplets are substantially different in average droplet size.

## Patentansprüche

1. Vorrichtung zum Herstellen von Partikeln, wobei die Vorrichtung mindestens zwei Zerstäuber (2), die eine Flüssigkeit (3), die dorthin transportiert worden ist, in Sprühnebeltröpfchen (4) zerstäuben, und einen thermischen Reaktor, in dem Partikel mit einem durchschnittlichen aerodynamischen Durchmesser von weniger als 1.000 nm gebildet werden, umfasst, **dadurch gekennzeichnet, dass** die mindestens zwei Zerstäuber (2) derart aufeinander gerichtet sind, dass die Sprühnebeltröpfchen (4), die dadurch hergestellt werden, miteinander kollidieren, um einen Nebel oder ein Aerosol zu bilden, wobei aus dem Nebel oder dem Aerosol die Partikel mit dem durchschnittlichen aerodynamischen Durchmesser von weniger als 1.000 nm in dem thermischen Reaktor gebildet werden.

2. Vorrichtung nach Anspruch 1, **dadurch gekennzeichnet, dass** die mindestens zwei Zerstäuber (2) im Wesentlichen koaxial derart aufeinander gerichtet angeordnet sind, dass die Sprühnebeltröpfchen (4) davon im Wesentlichen direkt geradlinig miteinander kollidieren.

3. Vorrichtung nach Anspruch 1 oder 2, **dadurch gekennzeichnet, dass** die Zerstäuber (2) in Paaren angeordnet sind, um ein oder mehrere Zerstäuberpaare derart zu bilden, dass die Zerstäuber (2) jedes Zerstäuberpaares im Wesentlichen direkt aufeinander gerichtet sind.

4. Vorrichtung nach einem der vorhergehenden Ansprüche 1 bis 3, **dadurch gekennzeichnet, dass** sie Mittel (5) umfasst, um eine Gasströmung aus mindestens einer Richtung zu dem Kollisionspunkt der Sprühnebeltröpfchen (4) hinzutransportieren.

5. Vorrichtung nach Anspruch 4, **dadurch gekennzeichnet, dass** sie mindestens eine Gasdüse (5) umfasst, um Gas aus mindestens einer Richtung zu dem Kollisionspunkt der Sprühnebeltröpfchen hinzuzuführen.

6. Vorrichtung nach Anspruch 5, **dadurch gekennzeichnet, dass** die Gasdüse (5) in der Vorrichtung derart angeordnet ist, dass die Gasströmung im Wesentlichen senkrecht zu den Sprühnebeltröpfchen (4) verläuft.

7. Vorrichtung nach einem der vorhergehenden Ansprüche 1 bis 6, **dadurch gekennzeichnet, dass** die Vorrichtung Mittel enthält, um mindestens zwei unterschiedliche Flüssigkeiten (3) zwei unterschiedlichen Zerstäubern (2) zuzuführen.

8. Vorrichtung nach einem der vorhergehenden Ansprüche 1 bis 7, **dadurch gekennzeichnet, dass** mindestens zwei Zerstäuber (2) angeordnet sind, um Sprühnebeltröpfchen (4) herzustellen, deren Tröpfchen sich im Wesentlichen in der durchschnittlichen Tröpfchengröße unterscheiden.

9. Vorrichtung nach einem der vorhergehenden Ansprüche 1 bis 8, **dadurch gekennzeichnet, dass** der thermische Reaktor ein Flammreaktor ist oder ein Raum ist, der mit getrennten Heizeinrichtungen (9) erwärmt wird.

10. Verfahren zum Herstellen von Partikeln, wobei in dem Verfahren mindestens eine Flüssigkeit (3) in zwei oder mehr Sprühnebeltröpfchen (4) zerstäubt wird, und in dem Partikel mit einem durchschnittlichen aerodynamischen Durchmesser von weniger als 1.000 nm in einem thermischen Reaktor gebildet werden, **gekennzeichnet durch** ein Lenken von mindestens zwei Sprühnebeltröpfchen (4) derart aufeinander zugerichtet, dass die Sprühnebeltröpfchen (4) miteinander kollidieren, um einen Nebel oder ein Aerosol zu bilden, und **gekennzeichnet durch** ein Transportieren des gebildeten Nebels oder Aerosols in den thermischen Reaktor, wobei Partikel mit dem durchschnittlichen aerodynamischen Durchmesser von weniger als 1.000 nm aus dem Nebel oder Aerosol gebildet werden.

11. Verfahren nach Anspruch 10, **gekennzeichnet durch** ein Lenken von zwei Sprühnebeltröpfchen (4) im Wesentlichen derart direkt aufeinander zugerichtet, dass die Sprühnebeltröpfchen (4) im Wesentlichen direkt geradlinig miteinander kollidieren.

12. Verfahren nach Anspruch 10 oder 11, **gekennzeichnet durch** ein Lenken der Sprühnebeltröpfchen (4) in Paaren gegenseitig aufeinander zu, um ein oder mehrere Paare von Sprühnebeltröpfchen derart zu bilden, dass die Sprühnebeltröpfchen (4), die gegenseitig aufeinander zu gelenkt worden sind, direkt geradlinig miteinander kollidieren.

13. Verfahren nach einem der vorhergehenden Ansprüche 10 bis 12, **gekennzeichnet durch** ein Transportieren einer Gasströmung aus mindestens einer Richtung zu dem Kollisionspunkt der Sprühnebeltröpfchen (4).

14. Verfahren nach Anspruch 13, **dadurch gekennzeichnet, dass** die Gasströmung zu dem Kollisionspunkt der Sprühnebeltröpfchen (4) im Wesentlichen senkrecht zu den Sprühnebeltröpfchen (4) verläuft.

15. Verfahren nach einem der vorhergehenden Ansprüche 10 bis 14, **dadurch gekennzeichnet, dass** mindestens eine Gasströmung mindestens ein Gas enthält, das in dem thermischen Reaktor reagiert.

16. Verfahren nach einem der vorhergehenden Ansprüche 10 bis 15, **gekennzeichnet durch** Verwenden einer Flamme als den thermischen Reaktor oder Bilden des thermischen Reaktors eines Raums, der mit getrennten Heizeinrichtungen (9) erwärmt wird.

17. Verfahren nach einem der vorhergehenden Ansprüche 10 bis 16, **gekennzeichnet durch** Bereitstellen mindestens zweier unterschiedlicher Sprühnebeltröpfchen (4) unter Verwendung mindestens zweier unterschiedlicher Flüssigkeiten (3).

18. Verfahren nach einem der vorhergehenden Ansprüche 10 bis 17, **gekennzeichnet durch** Zerstäuben der Sprühnebeltröpfchen (4), die im Wesentlichen gegeneinander gerichtet sind, derart, dass sich deren Tröpfchen im Wesentlichen in der durchschnittlichen Tröpfchengröße unterscheiden.

## Revendications

1. Dispositif pour produire des particules, le dispositif comprenant au moins deux atomiseurs (2) qui atomisent un liquide (3) transporté en son sein en pulvérisations de gouttelettes (4) et un réacteur thermique où des particules ayant un diamètre aérodynamique moyen de moins de 1 000 nm sont formées, **caractérisé en ce que** les au moins deux atomiseurs (2) sont dirigés l'un vers l'autre de sorte que les pulvérisations de gouttelettes (4) produites de ce fait entrent en collision l'une avec l'autre afin de former une brume ou un aérosol, brume ou aérosol à partir duquel les particules ayant le diamètre aérodynamique moyen de moins de 1 000 nm sont formées dans le réacteur thermique.

2. Dispositif selon la revendication 1, **caractérisé en ce que** au moins deux atomiseurs (2) sont agencés dirigés vers l'un l'autre sensiblement de façon coaxiale de sorte que les pulvérisations de gouttelettes (4) de ceux-ci entrent en collision sensiblement directement l'une contre l'autre.

3. Dispositif selon la revendication 1 ou 2, **caractérisé en ce que** les atomiseurs (2) sont agencés par couples pour former un ou plusieurs couples d'atomiseurs de sorte que les atomiseurs (2) de chaque couple d'atomiseurs sont dirigés sensiblement directement l'un vers l'autre.

4. Dispositif selon n'importe laquelle des revendications précédentes 1 à 3, **caractérisé en ce qu'**il comprend un moyen (5) pour transporter un flux de gaz provenant d'au moins une direction jusqu'au point de collision des pulvérisations de gouttelettes (4).

5. Dispositif selon la revendication 4, **caractérisé en ce qu'**il comprend au moins une buse de gaz (5) pour amener du gaz provenant d'au moins une direction jusqu'au point de collision des pulvérisations de gouttelettes.

6. Dispositif selon la revendication 5, **caractérisé en ce que** la buse de gaz (5) est agencée dans le dispositif de sorte que le flux de gaz court sensiblement perpendiculairement aux pulvérisations de gouttelettes (4).

7. Dispositif selon n'importe laquelle des revendications précédentes 1 à 6, **caractérisé en ce que** le dispositif inclut un moyen pour amener au moins deux liquides différents (3) à au moins deux atomiseurs différents (2).

8. Dispositif selon n'importe laquelle des revendications précédentes 1 à 7, **caractérisé en ce qu'**au moins deux atomiseurs (2) sont agencés pour produire des pulvérisations de gouttelettes (4) dont les gouttelettes sont sensiblement différentes en ce qui concerne la taille de gouttelette moyenne.

9. Dispositif selon n'importe laquelle des revendications précédentes 1 à 8, **caractérisé en ce que** le réacteur thermique est une flamme ou un espace qui est chauffé par des dispositifs de chauffage distincts (9).

10. Procédé pour produire des particules, procédé dans lequel au moins un liquide (3) est pulvérisé en deux ou plusieurs pulvérisations de gouttelettes (4) et pour former des particules ayant un diamètre aérodynamique moyen de moins de 1 000 nm dans un réacteur thermique, caractérisé en dirigeant au moins deux pulvérisations de gouttelettes (4) l'une vers l'autre de sorte que les pulvérisations de gouttelettes (4) entrent en collision entre elles afin de former une brume ou un aérosol, et pour transporter la brume ou l'aérosol formé dans le réacteur thermique, où des particules ayant le diamètre aérodynamique moyen de moins de 1 000 nm sont formées à partir de la brume ou de l'aérosol.

11. Procédé selon la revendication 10, caractérisé en dirigeant deux pulvérisations de gouttelettes (4) sensiblement directement l'une vers l'autre de sorte que les pulvérisations de gouttelettes (4) entrent en collision sensiblement directement l'une contre l'autre.

12. Procédé selon la revendication 10 ou 11, caractérisé en dirigeant les pulvérisations de gouttelettes (4) par couples l'une vers l'autre pour former un ou plusieurs couples de pulvérisations de gouttelettes de sorte que les pulvérisations de gouttelettes (4) dirigées l'une vers l'autre entrent en collision directement entre elles.

13. Procédé selon n'importe laquelle des revendications précédentes 10 à 12, caractérisé en transportant un flux de gaz provenant d'au moins une direction jusqu'au point de collision des pulvérisations de gouttelettes (4).

14. Procédé selon la revendication 13, **caractérisé en ce que** le flux de gaz est transporté jusqu'au point de collision des pulvérisations de gouttelettes (4) sensiblement perpendiculairement aux pulvérisations de gouttelettes (4).

15. Procédé selon n'importe laquelle des revendications précédentes 10 à 14, **caractérisé en ce qu'**au moins un flux de gaz contient au moins un gaz qui réagit dans le réacteur thermique.

16. Procédé selon n'importe laquelle des revendications précédentes 10 à 15, caractérisé en utilisant une flamme en tant que réacteur thermique ou en formant le réacteur thermique d'un espace qui est chauffé par des dispositifs de chauffage distincts (9).

17. Procédé selon n'importe laquelle des revendications précédentes 10 à 16, caractérisé en fournissant au moins deux pulvérisations de gouttelettes différentes (4) en utilisant au moins deux liquides différents (3).

18. Procédé selon n'importe laquelle des revendications précédentes 10 à 17, caractérisé en atomisant les pulvérisations de gouttelettes (4) dirigées sensiblement l'une contre l'autre de sorte que leurs gouttelettes ont une taille de gouttelette moyenne sensiblement différente.
